# EUROPÄISCHE PATENTSCHRIFT

(11) **EP 0 855 424 B1**
(45) Veröffentlichungstag und Bekanntmachung des Hinweises auf die Patenterteilung: **16.05.2001**
(21) Anmeldenummer: 98100437.7
(22) Anmeldetag: 13.01.1998
(51) Int. Cl.: C08K 5/3435, C08K 5/00, C08L 59/00

(54) **Verwendung einer sterisch gehinderten Aminverbindung zur Verbesserung der dieselkraftstoffbeständigkeit von Formteilen aus Polyoxymethylenpolymerisaten.**
Use of a sterically hindered amine compound to improve the diesel fuel resistance of moulded parts made from polyoxymethylene polymerisates.
Utilisation d'une amine comportant un empêchement stérique pour améliorer la résistance au gasoil de pièces moulées à partir de polymères polyoxyméthylène.

(30) Priorität: 24.01.1997 DE 19702425
(43) Veröffentlichungstag der Anmeldung: 29.07.1998
(73) Patentinhaber: BASF AKTIENGESELLSCHAFT, 67056 Ludwigshafen (DE)
(72) Erfinder: Kielhorn-Bayer, Sabine, Dr., 67133 Maxdorf (DE); Plachetta, Christoph, Dr., 67117 Limburgerhof (DE); Rieger, Peter, 68259 Mannheim (DE)

(56) Entgegenhaltungen:
- EP-A- 0 356 167
- WO-A-96/17008
- DE-A- 3 145 504
- PATENT ABSTRACTS OF JAPAN vol. 018, no. 145 (C-1178), 10.März 1994 & JP 05 320475 A (TORAY IND INC), 3.Dezember 1993, & DATABASE WPI Section Ch, Week 9402 Derwent Publications Ltd., London, GB; Class A25, AN 94012510 "polyoxymethylene resin composn. ..."

## Beschreibung

Die Erfindung betrifft die Verwendung von (B) 0,1 bis 2 Gew.-% mindestens einer sterisch gehinderten Aminverbindung zur Verbesserung der Dieselkraftstoffbeständigkeit von Formteilen und Lagerelementen im KFZ-Antriebs- und Lenkungsbereich aus thermoplastischen Formmassen aus
A) 10 bis 99 Gew.-% eines Polyoxymethylenhomo- oder copolymerisates,
C) 0 bis 2 Gew.-% mindestens eines Stabilisators aus der Gruppe der Benzotriazolderivate oder Benzoatderivate oder Benzophenonderivate
D) 0 bis 80 Gew.-% weiterer Zusatzstoffe und Verarbeitungshilfsmittel
wobei die Summe der Gewichtsprozente der Komponenten A) bis D) jeweils 100 % ergibt.

Polyacetale weisen aufgrund ihrer hohen Kristallinität eine gute Beständigkeit gegen zahlreiche Chemikalien auf, wobei die hohe Beständigkeit gegen Kraftstoffe (einschließlich den methanolhaltigen), Fette, Öle, Brems- und Kühlflüssigkeiten besonders hervorgehoben wird. Polyacetal zeigt nur eine geringe Quellung und demzufolge eine hohe Dimensionsstabilität. Die gute Verarbeitungsschwindung von Polyacetal (im Vergleich zu anderen technischen Thermoplasten) wird bei der Herstellung von Staugehäusen (Kraftstoffentnahmeeinrichtung) genutzt, da die in diese Anwendung integrierten Steckerverbindungen eine hohe Dichtigkeit aufweisen müssen. Gleichzeitig ist eine hohe Bruchdehnung des für das Staugehäuse verwendeten Materials notwendig, um die vom Gesetz geforderten Crashanforderungen zu erfüllen. Auch hierfür ist Polyacetal der Werkstoff der Wahl sowie für die gewünschte hohe Wärmeformbeständigkeit im Bereich der Kraftstoffhin- und Rückführungssysteme.

Diese guten Eigenschaften von Polyacetalen beziehen sich jedoch nur auf Temperaturen bis zu 60°C.

Aufgrund der Tendenz im Automobilsektor immer leistungsfähigere und gleichzeitig sparsamere Motoren zu entwickeln, sind speziell im Bereich der Dieselfahrzeuge unerwartete Schwierigkeiten aufgetreten. Um eine optimale Verbrennung des Dieselkraftstoffes zu erreichen, wird der Dieselkraftstoff bei Drücken um 1300 bar zerstäubt. Anschließend erfolgt eine abrupte Entspannung auf 0 bar. Bei diesem Vorgang im sogenannten common rail system können kurzzeitig Temperaturen bis 160°C im Motorraum auftreten. Dies hat zur Folge, daß sich alle mit dem Dieselkraftstoff im Berührung kommenden Teile entsprechend stark aufheizen und durch Mischung von kaltem Kraftstoff aus dem Tank und heißem Kraftstoff aus dem Motorbereich im Kraftstoffhin- und Rückführungssystem Temperaturen um 90°C auftreten. Selbst im Tankbereich können noch Temperaturen über 90°C auftreten, da vom Kraftstoffgebersystem überschüssiger, noch heißer Dieselkraftstoff in den Tank zurückgeführt wird. Unter diesen Bedingungen zersetzt sich Polyacetal und schlägt sich in den Leitungen nieder, so daß diese zum einen brüchig und zum anderen undurchlässig für den Dieselkraftstoff werden.

Darüber hinaus enthalten Dieselkraftstoffe Schwefel bzw. Schwefelverbindungen, welche die POM-Matrix zusätzlich schädigen, da insbesondere unter Lufttzufuhr saure Schwefelverbindungen entstehen, welche das Polymer abbauen.

Derartige Schwefelverbindungen finden sich ebenso in KFz-Teilen, welche vulkanisierte Elastomere enthalten oder von solchen umhüllt werden (z.B. Lagerelemente im Betriebs- und Lenkungsbereich, welche aus Staubschutzgründen Elastomermanschetten aufweisen).

Sterisch gehinderte Amine (HALS-Verbindungen) gegebenenfalls mit Benzotriolderivaten werden üblicherweise zur Erhöhung der UV-Stabilität in POM-Massen eingesetzt, wobei diese je nach Anwendung mit anderen UV-Stabilisatoren kombiniert werden können: siehe z.B. EP-A 448 038, EP-A 171 941, EP-A 586 988, DE-A 33 15 115 und DE-A 44 04 081.

Aufgabe der vorliegenden Erfindung war es daher, Formteile aus Polyacetalen zur Verfügung zu stellen, welche bei hohen Dauergebrauchstemperaturen eingesetzt werden können und gegenüber Dieselkraftstoffen oder vulkanisierten Elastomeren beständig sind, wobei die guten oben genannten Gebrauchseigenschaften weitestgehend erhalten bleiben sollen.

Demgemäß wurde die eingangs definierte Verwendung von Polyacetalen gefunden. Bevorzugte Ausführungsformen sind den Unteransprüchen zu entnehmen.

Als Komponente A) enthalten die erfindungsgemäß verwendbaren Formmassen 10 bis 99, vorzugsweise 30 bis 99 Gew.-% und insbesondere 90 bis 99 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂0- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂0- noch bis zu 50, vorzugsweise 0,1 bis 20, insbesondere 0,3 bis 10 mol-% und ganz besonders bevorzugt 2 bis 6 mol-% an wiederkehrenden Einheiten 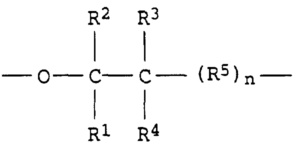 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 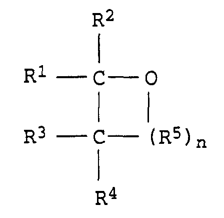 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 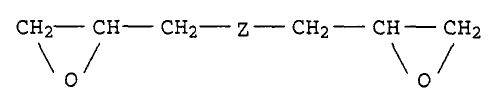 und/oder 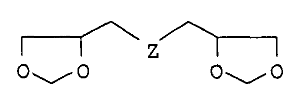 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente A) können insbesondere auch Produkte eingesetzt werden, die noch einen relativ hohen Anteil (im allg. > 0,1 Gew.-%) an thermisch instabilen Anteilen enthalten. Die Komponenten C) und D) insbesondere, wenn sie vor der Mischung mit dem Polyoxymethylen vorgemischt werden, stabilisieren derartige Roh-Polyoxymethylene sehr gut.

Als Komponente B) enthalten die erfindungsgemäß verwendbaren Formmassen 0,05 - 2, vorzugsweise 0,1 - 1 und insbesondere 0,2 - 0,6 Gew.-% mindestens einer sterisch gehinderten Aminverbindung, vorzugsweise kommen z.B. Verbindungen der Formel 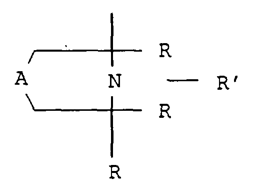 in Betracht, wobei
- R: gleiche oder verschiedene Alkylreste
- R': Wasserstoff oder einen Alkylrest und
- A': eine gegebenenfalls substituierte 2- oder 3-gliedrige Alkylenkette
bedeutet.

Bevorzugte Komponente B) sind Derivate des 2,2,6,6-Tetramethylpiperidins wie:
4-Acetoxy-2,2,6,6-tetramethylpiperidin,
4-Stearoyloxy-2,2,6,6-tetramethylpiperidin,
4-Aryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin,
4-Phenoxy-2,2,6,6-6-tetramethylpiperidin,
4-Benzoxy-2,2,6,6-tetramethylpiperidin,
4 - (Phenylcarbamoyloxy)-2,2,6,6-tetramethylpiperidin.

Ferner sind
Bis(2,2,6,6-tetramethyl-4-piperidyl)oxalat,
Bis(2,2,6,6-tetramethyl-4-piperidyl)malonat,
Bis (2,2,6,6-tetramethyl-4-piperidyl)adipat,
Bis(1,2,2,6,6-pentamethyl-piperidyl)sebacat,
Bis(2,2,6,6-tetramethyl-4-piperidyl)terephthalat,
1,2-bis(2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-diperidyl)adipat und
Tris(2,2,6,6-tetramethyl-4-piperidyl)benzen-1,3,5-tricarboxylat geeignet.

Darüber hinaus sind höhermolekulare Piperidinderivate wie das Dimethylsuccinatpolymer mit 4-Hydroxy-2,2,6,6-tetramethyl-1-piperidinethanol oder
Poly-6-(1,1,3,3-tetramethylbutyl)amino-1,3,5-triazin-2,4-diyl(2,2,6,6-tetramethyl-4-piperidinyl)imino-1,6-hexandiyl (2,2,6,6-tetramethyl-14-piperidinyl)imino geeignet, welche wie Bis(2,2,6,6-tetramethyl-4-piperidyl)-sebazat besonders gut geeignet sind.

Derartige Verbindungen sind unter der Bezeichnung Tinuvin® oder Chimasorb® (eingetragenes Warenzeichen der Firma Ciba-Geigy AG) im Handel erhältlich.

Als weitere besonders bevorzugte Aminverbindung B) sei Uvinul® 4049 H der Firma BASF AG genannt:

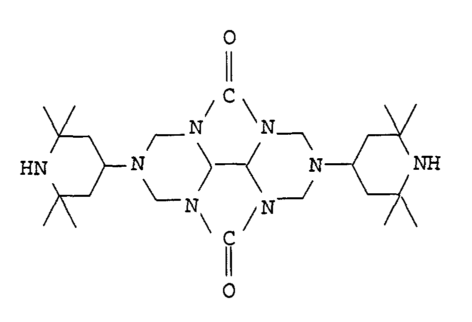

Die erfindungsgemäßen Formmassen können als Komponente C) 0 - 2, vorzugsweise 0,1 - 1 und insbesondere 0,2 - 0,6 Gew.-% mindestens eines Stabilisators aus der Gruppe der Benzotriazolderivate oder Benzophenonderivate oder aromatischen Benzoatderivate enthalten.

Geeignete Benzotriazolderivate sind:
2-(2-Hydroxy-5-methylphenyl) -benzotriazol,
2-(2-Hydroxy-3,5-di-t-butylphenyl)-benzotriazol,
2-(3,5-Di-t-amyl-hydroxyphenyl)-benzotriazol,
2-(2'-Hydroxy-3',5'-diisoamylphenyl)-benzotriazol,
2-(2'-Hydroxy-4-octoxyphenyl)benzotriazol,
2-(2H)-Benzotriazol-2-yl)-4,6-bis-(1,1-dimethylpropyl)-phenol und
2-(2H-Benzotriazol-2-yl)-4-(1,1-dimethylpropyl)-6-(1-methylpropyl) -phenol.

Derartige Verbindungen sind unter der Bezeichnung Tinuvin® (eingetragenes Warenzeichen der Firma Ciba Geigy AG) im Handel erhältlich.

Bevorzugte Benzophenonderivate sind:
2,4-Dihydroxybenzophenon,
2-Hydroxy-4-methoxybenzophenon,
2-Hydroxy-4-octoxybenzophenon,
2-Hydroxy-4-dodecyloxybenzophenon,
2,2' -Dihydroxy-4-methoxybenzophenon,
2,2'-Dihydroxy-4,4'-dimethoxybenzophenon,
2-Hydroxy-4-methoxy-5-sulphobenzophenone und
2-Hydroxy-4-oxybenzylbenzophenon.

Als aromatische Benzoatderivate seien beispielhaft p-t-Butylphenylsalicylat und p-Octylphenylsalicylat genannt.

Als Komponente D) können die erfindungsgemäßen Formmassen 0 bis 80, vorzugsweise 0 bis 50 Gew.-% und insbesondere 0 bis 40 Gew.-% üblicher Zusatzstoffe und Verarbeitungshilfsmittel enthalten.

Als verstärkend wirkende Füllstoffe in Mengen bis zu 50 Gew.-%, vorzugsweise bis zu 40 Gew.-% seien beispielsweise Kaliumtitanat- Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Bevorzugte Kombinationen von Füllstoffen sind: Wollastonit mit Glasfasern, wobei Mischungsverhältnisse von 5:1 bis 1:5 bevorzugt sind.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/ 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 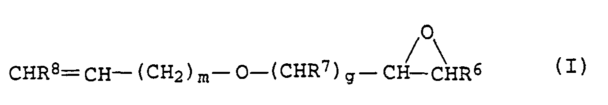 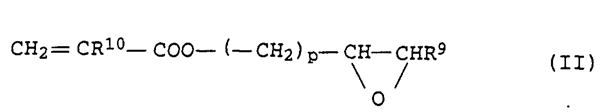 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, insbesondere 0,3 bis 20 Gew.-% Glycidylacrylat und/oder |
| 0 bis 40, | insbesondere 0,1 bis 20 Gew.-% Glycidylmethacrylat, und |
| 1 bis 50, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 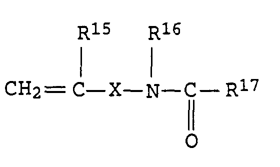 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

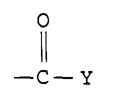

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Elastomeren D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)-acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Haftvermittler, Lichtstabilisatoren und Pigmente genannt. Der Anteil solcher Zusätze liegt im allgemeinen im Bereich von 0,001 bis 5 Gew.-%. Es versteht sich von selbst, daß diese Stabilisatoren verschieden von B) sowie gegebenenfalls C) sein sollen.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäß verwendbaren thermoplastischen Formmassen zeichnen sich durch ein ausgewogenes Eigenschaftsspektrum. Daraus hergestellte Formteile sind für hohe Dauergebrauchstemperaturen geeignet und dieselkraftstoffbeständig. Daher eignen sich derartige Formteile insbesondere zur Anwendung als Formkörper im Dieselkraftstoffmotor bzw. -motorraum und als Lagerelemente im KFz-Antriebs- und Lenkungsbereich, insbesondere als Kraftstoffentnahmevorrichtung, Roll-over Ventile, Dieselkraftstoffleitungen, Unterdruckventile, Halterung für Dieselkraftstoffpumpen, Pumpengehäuse, Innenteile für Dieselkraftstoffpumpen, insbesondere Läufer und Stator im Elektromotor.

### Beispiele

Es wurden folgende Komponenten eingesetzt:

### Komponente A)

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer eine Schmelzvolumenrate von 7,5 cm³/10 min. (190°C, 2,16 kg Auflagegewicht nach ISO 1133).

### Komponente B)

B/1
   Tinuvin® 622 LD der Firma Ciba Geigy AG: Dimethylsuccinatpolymer mit 4-Hydroxy-2,2,6,6-tetramethyl-1-piperidinethanol
B/2
   Tinuvin® 770 DF der Firma Ciba Geigy AG: Bis(2,2,6,6-tetramethyl -4-piperidyl)sebazat

### Komponente C

C/1
   Tinuvin® 234 der Fa. Ciba: 2-(2'-Hydroxy-3',5-bis(1,1-Dimethylbenzyl)phenyl)-benzotriazol
C/2
   Tinuvin® 329 der Fa. Ciba: 2-(2H-Benzotriazol-2-yl)-2,4-(tertbutyl) phenol

### Komponente D

D/1 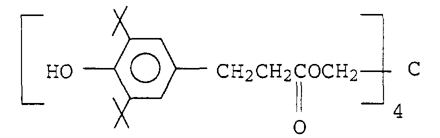 Irganox® 1010 (Ciba-Geigy)
D/2 Irganox® 245 der Firma Ciba-Geigy: 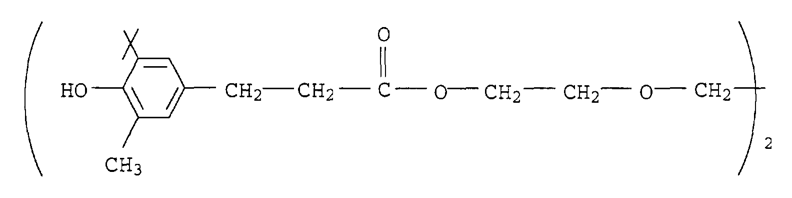
D/3
Polyamid-Oligomeres mit einem Molekulargewicht von etwa 3000, hergestellt aus Caprolactam, Hexamethylendiamin, Adipinsäure und Essigsäure (als Molekulargewichtsregler) nach Bsp. 5-4 der US-A 3 960 984 ("PA-dicapped")
D/4
Synthetisches Mg-Silicat (Ambosol® der Firma Société Nobel, Bozel, Puteaux) mit folgenden Eigenschaften:

| | |
|---|---|
| Gehalt an MgO | ≥ 14,8 Gew.-% |
| Gehalt an SiO₂ | ≥ 59 Gew.-% |
| Verhältnis SiO₂ ^{: MgO} | 2,7 mol/mol |
| Schüttdichte | 20 bis 30 g/100 ml |
| Glühverlust | < 25 Gew.-% |

D/5
Ein Melamin-formaldehyd-Kondensat gemäß Beispiel 1 der DE-A 25 40 207 eingesetzt.

Jede POM-Mischung enthielt als Verarbeitungshilfsmittel
0,4 Gew.-% Komponente D/2, 0,04 Gew.-% Komponente D/3,
0,05 Gew.-% D/4 und 0,2 Gew.-% D/5. Zur Herstellung der Mischungen wurde Komponente A mit den in Tabelle 1 angegebenen Komponenten gemischt und in einem Zweischneckenextruder bei 220°C compoundiert, entgast und als Strang ausgepreßt sowie granuliert. Die Einsatzmengen der Komponenten D/1, C und B sind der Tabelle 1 zu entnehmen. Anschließend wurden bei 190°C Probekörper hergestellt.

Die Lagerung erfolgte in Winterdieselkraftstoff CFPP bis -22°C der Fa. Haltermann, Lagerungsdauer 300 h, Lagerungstemperatur in der Regel 90°C (Abweichungen sind angemerkt). In ein mit 21 Dieselkraftstoff gefülltes Glasgefäß, bestückt mit Rückflußkühler, wurden 5 POM-Rundscheiben mit 2 mm Dicke, 60 mm Durchmesser und Anguß (Gesamtoberfläche von 405 cm²) gegeben. Am oberen Ende des Angusses wurden die Rundscheiben so zusammengefügt, daß sie sich gegenseitig nicht berühren konnten und gewährleistetet war, daß diese vollständig von Kraftstoff umspült wurden. Nach 300 Std. Lagerung wurden die Rundscheiben entnommen, auf ein gut saugendes, nicht fusselndes Tuch gelegt und bei RT 4 Std. liegen gelassen, bis überschüssige Flüssigkeit entfernt war. Danach wurde das Gewicht der zusammengefügten 5er-Einheit Rundscheiben gewogen und der Gewichtsverlust bestimmt. Vor der Lagerung wurde das Ausgangsgewicht bestimmt. Nach dem ersten Wiegevorgang nach Lufttrocknung wurden die Rundscheiben im Umluftschrank 24 h bei 90°C getrocknet und nochmals gewogen. Anschließend wurde die multiaxiale Zähigkeit (Wₘₐₓ) nach ISO 6603-2 1990 bei 23°C bestimmt.

Die Ergebnisse der Messungen sind der Tabelle 1 zu entnehmen.

**Tabelle 1**

| Bsp. | E/1 Gew.-% | C Gew.-% | B Gew.-% | % Gew.-Änd. | % Gew.-Änd. n.Trockn. | Wₘₐₓ [kJ/mm²] |
|---|---|---|---|---|---|---|
| 1 | - | 0,4 C/1 | 0,4 B/1 | +0,40 | -0,01 | 2,1 |
| 2 | - | 0,4 C/2 | 0,4 B/1 | +0,45 | -0,02 | 2,1 |
| 3 | - | 0,4 C/1 | 0,4 B/2 | +0,35 | -0,02 | 2,0 |
| 4 | - | 0,4 C/2 | 0,4 B/2 | +0,45 | -0,01 | 2,0 |
| 5 | - | - | 0,4 B/1 | +0,40 | -0,01 | 2,1 |
| 6 | - | - | 0,4 B/2 | +0,40 | -0,02 | 2,0 |
| 7 | - | 0,4 C/1 | 0,2 B/1 | -1,50 | -3,0 | 1,6 |
| 8 | - | - | 0,2 B/1 | -1,50 | -3,0 | 1,6 |
| 1V | - | 0,4 C/1 | - | -7,0 | -14,0 | 0,3 |
| 2V | 0,3 | - | - | -10,2 | -19,9 | 0,3 |
| 3V | - | - | - | -6,5 | -13,0 | 0,3 |
| 4*V | - | - | - | +0,40 | -0,02 | 2,0 |
| 5**V | - | - | - | -1,20 | -6,5 | 0,8 |
| 6***V | - | - | - | -37,0 | -42,0 | 0 |

| | | | | | | |
|---|---|---|---|---|---|---|
| * Lagerung von Polyacetal ohne HALS und/oder UV-Absorber bei nur 60°C. | | | | | | |
| ** Lagerung von Polyacetal bei 75°C ohne HALS und UV-Absorber. | | | | | | |
| *** Lagerung von Polyacetal bei 90°C ohne HALS und UV-Absorber mit einer definierten Luftzufuhrmenge von 40 l/h. | | | | | | |

## Patentansprüche

1. Verwendung von (B) 0,1 bis 2 Gew.-% mindestens einer sterisch gehinderten Aminverbindung zur Verbesserung der Dieselkraftstoffbeständigkeit von Formteilen und Lagerelementen im KFZ-Antriebs- und Lenkungsbereich aus thermoplastischen Formmassen aus
A) 10 bis 99 Gew.-% eines Polyoxymethylenhomo- oder copolymerisates,
C) 0 bis 2 Gew.-% mindestens eines Stabilisators aus der Gruppe der Benzotriazolderivate oder Benzoatderivate oder Benzophenonderivate
D) 0 bis 80 Gew.-% weiterer Zusatzstoffe und Verarbeitungshilfsmittel
wobei die Summe der Gewichtsprozente der Komponenten A) bis D) jeweils 100 % ergibt.

2. Verwendung nach Anspruch 1, in denen die Komponente C) aus 2-(2'-Hydroxy-3',5'-bis(1,1-Dimethylbenzyl)phenyl)-benzotriazol oder 2-(2H-Benzotriazol-2-yl)-2,4-tert.butyl)phenol oder deren Mischungen aufgebaut ist.

3. Verwendung nach den Ansprüchen 1 oder 2, wobei als Komponente B) ein Dimethylsuccinatpolymer mit 4-Hydroxy-2,2,6,6-tetramethyl-1-piperidinethanol oder Bis(2,2,6,6-tetramethyl-4-piperidyl)sebazat oder deren Mischungen eingesetzt wird.

## Claims

1. The use of (B) from 0.1 to 2% by weight of at least one sterically hindered amine compound for improving the diesel-fuel resistance of moldings or of bearing components in the motor vehicle power train sector or the motor vehicle steering sector, made from thermoplastic molding compositions made from
A) from 10 to 99% by weight of a polyoxymethylenehomo- or copolymer,
C) from 0 to 2% by weight of at least one stabilizer selected from the group consisting of the benzotriazole derivatives and benzoate derivatives and benzophenone derivatives, and
D) from 0 to 80% by weight of other additives and processing aids,
where the total of the percentages by weight of components A) to D) is always 100%.

2. The use as claimed in claim 1, in which component C) is composed of 2-(2'-hydroxy-3',5'-bis-(1,1-dimethylbenzyl)phenyl)benzotriazole or 2-(2H-benzotriazol-2-yl)-2,4-tert-butyl)phenol, or of a mixture of these.

3. The use as claimed in claim 1 or 2, where, as component B), use is made of a dimethyl succinate polymer with 4-hydroxy-2,2,6,6-tetramethyl-1-piperidineethanol or bis(2,2,6,6-tetramethyl-4-piperidyl) sebacate or of a mixture of these.

## Revendications

1. Utilisation de (B) 0,1 à 2% en poids d'au moins un composé aminé à empêchement stérique pour améliorer la résistance au carburant Diesel de pièces moulées et d'éléments de palier dans le domaine de l'entraînement et de la direction de véhicules automobiles, à base de masses de moulage thermoplastiques constituées
A) de 10 à 99% en poids d'un homopolymère ou copolymère de polyoxyméthylène,
C) de 0 à 2% en poids d'au moins un agent stabilisant du groupe des dérivés de benzotriazole ou des dérivés de benzoate ou des dérivés de benzophénone,
D) de 0 à 80% en poids d'autres additifs et agents auxiliaires de traitement,
la somme des % en poids des composants A) à D) donnant chaque fois 100%.

2. Utilisation suivant la revendication 1, dans laquelle le composant C) est constitué de 2-(2'-hydroxy-3',5'-bis(1,1-diméthylbenzyl)phényl)-benzotriazole ou de 2-(2H-benzotriazol-2-yl)-2,4-(tert-butyl)phénol ou de leurs mélanges.

3. Utilisation suivant l'une des revendications 1 et 2, dans laquelle on met en oeuvre, comme composant B), un polymère de succinate de diméthyle avec du 4-hydroxy-2,2,6,6-tétraméthyl-1-pipéridine-éthanol ou du sébaçate de bis(2,2,6,6-tétraméthyl-4-pipéridyle) ou leurs mélanges.
